# EUROPÄISCHE PATENTSCHRIFT

(11) **EP 2 193 303 B1**
(45) Veröffentlichungstag und Bekanntmachung des Hinweises auf die Patenterteilung: **25.06.2014**
(21) Anmeldenummer: 08760467.4
(22) Anmeldetag: 04.06.2008
(51) Int. Cl.: F16L 33/207, F16L 13/14

(54) **PRESSFITTING FÜR EIN ROHR, INSBESONDERE KUNSTSTOFFROHR ODER KUNSTSTOFF-METALL-VERBUNDROHR**
PRESS FITTING FOR A PIPE, IN PARTICULAR PLASTIC PIPE OR PLASTIC AND METAL COMPOSITE PIPE
RACCORD À PRESSER POUR UN TUBE, NOTAMMENT POUR UN TUBE PLASTIQUE OU TUYAU COMPOSITE CONSTITUÉ DE PLASTIQUE ET DE MÉTAL

(30) Priorität: 31.07.2007 DE 102007035933
(43) Veröffentlichungstag der Anmeldung: 09.06.2010
(73) Patentinhaber: Uponor Innovation AB, 73061 Virsbo (SE)
(72) Erfinder: BOHL, Marcus, 96114 Hirschaid (DE); KAUFMANN, Bernd, 97437 Hassfurt (DE); KERN-EMMERICH, Thomas, 97464 Niederwerrn (DE)
(74) Vertreter: Epping - Hermann - Fischer
(86) Internationale Anmeldenummer: PCT/EP2008/056884
(87) Internationale Veröffentlichungsnummer: WO 2009/015927

(56) Entgegenhaltungen:
- EP-A- 0 621 432
- EP-A- 1 790 896

## Beschreibung

Die Erfindung betrifft einen Pressfitting für ein Rohr und insbesondere einen Pressfitting für ein Kunststoffrohr oder Kunststoff-Metall-Verbundrohr.

Derartige Pressfittinge sind grundsätzlich bekannt. Sie weisen einen Fittingkörper auf, von dem eine Stützhülse absteht. Das Ende eines anzuschließenden Rohres wird auf die Stützhülse geschoben, woraufhin außen auf das aufgeschobene Rohrende eine Presshülse aufgepresst wird. Diese Presshülse ist zur Vereinfachung der Montage an dem Fittingkörper vormontiert und verläuft demzufolge im wesentlichen konzentrisch zur Stützhülse.

Beispiele für den zuvor beschriebenen Typ eines Pressfittings finden sich in DE-A-42 31 623, DE-A-196 03 228 und DE-C-100 10 573.

Bei den Pressfittingen, die in den zuvor genannten Schriften beschrieben sind, wird die Presshülse direkt am Fittingkörper gehalten. Hierzu weisen die Fittingkörper Bunde auf, auf denen das eine Ende der Presshülsen aufgeschoben ist. Alternativ dazu können die Fittingkörper axial ausgerichtete Nuten mit Umfangswänden aufweisen, die die Presshülsen von außen umgreifen (DE-A-42 31 623). Insbesondere bei Fittingkörpern für den Anschluss von Rohren mit relativ großen Durchmessern bedarf es eines nicht unerheblichen Materialeinsatzes zur direkten Befestigung der Presshülsen an den Fittingkörpern, da die Bunde bzw. Umfangswände, an denen die Presshülsen gehalten sind, in ihrem Umfang ebenfalls beträchtlich sein können.

Es ist ferner bekannt, Presshülsen von Pressfittingen mittels Halteringen aus Kunststoff an den Fittingkörpern zu fixieren. Derartige Pressfittinge sind in DE-U-295 03 019, DE-C-43 04 680, DE-C-198 56 999, DE-A-101 34 727, DE-B-102 33 559, EP-A-0 728 979 und EP-A-0 942 219 beschrieben. Auch bei diesen bekannten Pressfittingen ist der Materialeinsatz für den Haltering bei Pressfittingen für Rohre mit relativ großen Durchmessern nicht unbeträchtlich.

Aus DE-C-101 37 078 ist es bekannt, bei einem Pressfitting die Presshülse am Fittingkörper durch das Hintergreifen eines Innenwulstes am Halteende der Presshülse hinter einem Außenwulst am Fittingkörper gegen ein Ablösen zu sichern.

Aus EP-A- 0 621 432 ist ein Pressfitting gemäß dem Oberbegriff der Ansprüche 1 und 2 bekannt.

Aufgabe der Erfindung ist es, einen Pressfitting für ein Rohr, insbesondere ein Kunststoffrohr oder Kunststoff-Metall-Verbundrohr zu schaffen, der eine vormontierte Presshülse aufweist, wobei der Materialeinsatz zum Halten der Presshülse reduziert und die Vormontage der Presshülse vereinfacht ist.

Zur Lösung dieser Aufgabe wird mit der Erfindung ein Pressfitting für ein Rohr, insbesondere für ein Kunststoffrohr oder Kunststoff-Metall-Verbundrohr vorgeschlagen, wobei der Pressfitting versehen ist mit
- einem Fittingkörper, der eine Stützhülse mit einem freien Ende aufweist, über das auf die Stützhülse ein Ende eines anzuschließenden Rohres aufschiebbar ist, und
- einer Presshülse, die zum Andrücken eines auf die Stützhülse geschobenen Endes eines anzuschließenden Rohres plastisch verformbar ist und die ein das freie Ende der Stützhülse abgewandtes axiales Halteende aufweist, an dem die Presshülse am Fittingkörper gehalten ist.

Bei diesem Pressfitting ist erfindungsgemäß vorgesehen,
- dass die Presshülse mittels mindestens eines an ihrem Halteende angeordneten Abstandshalteelements im wesentlichen konzentrisch zur Stützhülse gehalten ist,
- dass der Fittingkörper im Bereich des Halteendes der Presshülse eine Verriegelungsvertiefung oder einen Verriegelungsvorsprung aufweist und
- dass die zylindrische Wandung der Presshülse am Halteende mindestens eine Öffnung aufweist, durch die sich ein Verriegelungselement zur axialen Fixierung der Presshülse am Fittingkörper erstreckt,
- wobei das Verriegelungselement in die Verriegelungsvertiefung des Fittingkörpers hineinragt und in dieser endet oder das Verriegelungselement den Verriegelungsvorsprung des Fittingkörpers um- oder hintergreift.

Bei dem erfindungsgemäßen Pressfitting ist die Presshülse am Fittingkörper im wesentlichen konzentrisch zur Stützhülse gehalten, und zwar mit Hilfe mindestens eines Abstandshalteelements. Zweckmäßigerweise existieren mehrere dieser Abstandshalteelemente. Neben dem mindestens einen Abstandshalte-element weist der erfindungsgemäße Pressfitting auch mindestens ein Verriegelungselement auf, das der axialen Fixierung der Presshülse am Fittingkörper dient. Zu diesem Zweck erstreckt sich das Verriegelungselement erfindungsgemäß durch eine Öffnung in der zylindrischen Wandung der Presshülse an deren Halteende und ragt bis in eine Verriegelungsvertiefung am Fittingkörper hinein. Das Verriegelungselement wird also durch einfaches radiales Aufstecken auf die Presshülse des Pressfittings montiert. Über die Zusammenwirkung des Verriegelungselements mit der Verriegelungsvertiefung am Fittingkörper erfolgt die axiale Fixierung. Von diesem Konzept umfasst sind nach dem Prinzip der kinematischen Umkehr auch Pressfittings, bei denen das Verriegelungselement einen Verriegelungsvorsprung um- oder hintergreift, welcher am Fittingkörper ausgebildet ist. In beiden Fällen kommt es zur axialen Fixierung und Verriegelung der Presshülse durch radiales Aufstecken eines Verriegelungselements.

Das Verriegelungselement bzw. das Abstandshalteelement besteht zweckmäßigerweise aus einem Kunststoffmaterial. Entweder das Verriegelungs-element oder das Abstandshalteelement oder beide Elemente dienen auch der Begrenzung der Rohreinführung in den Pressfitting und kommen somit mit der Stirnseite des anzuschließenden Rohrendes in Kontakt. Sofern es sich bei dem Rohr um ein Kunststoff-Metall-Verbundrohr oder auch um ein Metallrohr handelt, ist die Ausbildung der zuvor genannten Elemente aus Kunststoff bzw. mit einer Kunststoffbeschichtung bezüglich der galvanischen Trennung der Metalleinlage des Rohres gegenüber dem Material des Fittingkörpers, das im Regelfall metallisch ist, von Vorteil.

Die in den Fittingkörper eingebrachte Vertiefung zur Aufnahme des Verriegelungselements ist zweckmäßigerweise als Umfangsnut am Fittingkörper und vorzugsweise an dessen Stützhülse ausgebildet. Alternativ kann statt der Umfangsvertiefung auch eine Umfangsrippe am Fittingkörper ausgebildet sein, die dann von dem Verriegelungselement bzw. den Verriegelungselementen umgriffen wird.

Bei dem Abstandshalteelement handelt es sich vorzugsweise um ein Element, das sich zwischen der Presshulse bzw. deren Wandung und dem Fittingkörper abstützt. Das Abstandshalteelement braucht nicht notwendigerweise auch der axialen Fixierung der Presshülse zu dienen. Sofern dem Abstandshalteelement diese zusätzliche Funktion verliehen wird, ist es als Verriegelungselement im Sinne der Erfindung anzusehen. Ein derartiges Abstandshaltefunktion aufweisendes Verriegelungselement stützt sich zweckmäßigerweise auf dem Grund der Verriegelungsvertiefung (oder auf dem Verriegelungsvorsprung) ab, so dass die Presshülse bezogen auf eine Radialebene fixiert ist.

In dem zuvor beschriebenen Fall kann das Abstandshalte- und Verriegelungs-element, das zweckmäßig aus Kunststoffmaterial besteht, neben diesen Funktionen vorteilhafterweise auch noch die Funktion des Anschlags zur Führung des Presswerkzeuges und die Funktion der galvanischen Trennung des angeschlossenen Rohres (wenn dieses aus Metall besteht oder eine Metallschicht aufweist), gegenüber dem Fittingkörper (der im Regelfall ebenso aus einer Metalllegierung besteht bzw. metallisches Material aufweist) übernehmen, wobei zusätzlich noch vorgesehen sein kann, dass das (Abstandshalte- und Verriegelungs-)Element auch der Verpresskennzeichnung dient, indem zumindest ein Teil des Elements infolge der Einwirkung des Presswerkzeugs auf die Presshülse abbrechen oder sichtbar zerstört/beschädigt wird.

Vorteilhafterweise umfasst der Pressfitting drei Verriegelungselemente, die sämtlich in eine am Fittingkörper ausgebildete Umfangsvertiefung hineinragen und sich gegen deren Grund abstützen.

Alternativ ist es möglich, dass das Abstandshalteelement auf andere Weise als das Verriegelungselement an der Presshülse gehalten ist. So wäre es beispielsweise möglich, dass das Abstandshalteelement als reines Distanzstück in dem Zwischenraum zwischen Presshülse und Fittingkörper angeordnet ist. Ferner ist es denkbar, dass das Abstandshalteelement als ein nach innen verformter Bereich der Presshülse ausgebildet ist. Hier bietet sich beispielsweise eine nach innen abgewinkelte Lasche oder dergleichen oder eine sickenförmige Vertiefung der Wandung der Presshülse an. Das Abstandshalteelement stützt sich zweckmäßigerweise unabhängig von seiner Ausbildung außen an dem Fittingkörper bzw. der Stützhülse ab. Sofern die Stützhülse bzw. der Fittingkörper mit der Umfangsvertiefung versehen ist, kann das Abstandshalteelement breiter als die Umfangsnut ausgebildet sein, um sich auf dieser abzustützen.

Sofern das Abstandshalteelement Metall aufweist (beispielsweise weil es als Teil der im Regelfall metallischen Presshülse ausgebildet ist), ist es von Vorteil, wenn sich das Abstandshaltelement, bezogen auf das freie Ende der Stützhülse, weiter von diesem entfernt befindet als dasjenige Kunststoff aufweisende Abstandshalte- bzw. Verriegelungselement, an dem das Rohrende anliegt, wenn es in den Pressfitting eingeschoben ist. Diese relative Anordnung ist zweckmäßig im Hinblick auf die Tatsache, dass dann bei Verwendung eines Kunststoff-Metall-Verbundrohres die Metalleinlage des Rohres nicht in Kontakt mit einem metallischen Werkstoff des Pressfittings gelangt.

In vorteilhafter Weiterbildung der Erfindung ist vorgesehen, am Verriegelungselement und/oder am Abstandshaltelement eine außen an der Wandung der Presshülse angeordnete Lasche auszubilden, die in einen Presswerkzeug-Anlagebereich der Presshülse hineinragt. Innerhalb dieses Anlagebereichs liegt das Presswerkzeug bei Verpressung der Presshülse an. Damit wirkt das Presswerkzeug auf die Lasche ein, wodurch diese beim Verpressen der Presshülse vom Verriegelungselement bzw. Abstandshalteelement abgetrennt wird, was wiederum der optischen Verpresskennzeichnung dient.

Die vorteilhafte Haltekonstruktion zur Fixierung der Presshülse am Fittingkörper erstreckt sich nicht mehr, wie bei bekannten Halteringen oder dergleichen Haltewülsten, über 360°. Vielmehr ist vorgesehen, lediglich noch einzelne Verriegelungs- bzw. Abstandshalteelemente (beispielsweise drei gleichmäßig über den Umfang verteilt angeordnete derartige Elemente) zu verwenden. Zwischen diesen Elementen befinden sich Zwischenräume, die den Blick auf das Halteende der Presshülse freigeben und somit der Lagekontrolle bzw. der Kontrolle der Einschubtiefe des anzuschließenden Rohrendes dienen.

Dadurch, dass kein vollständig geschlossener Ring zum Halten der Presshülse benötigt wird, sondern lediglich einzelne Ringabschnitte (in Form der Verriegelungs- bzw. Abstandshalteelemente), die sich über lediglich einen relativ kleinen Umfangswinkel von wenigen Grad (beispielsweise 10° bis 15°) erstrecken, sind die Materialkosten für die Presshülsenhalterung vernachlässigbar gering, was sich insbesondere vorteilhaft bei Rohrnennweiten größer als 40 mm und bei Pressfittingen auswirkt, die zum Verbinden mehrerer Rohre vorgesehen sind (beispielsweise normale Kupplungen oder T-Stücke).

Die Vorteile der erfindungsgemäßen Konstruktion lassen sich wie folgt zusammenfassen:
- Realisierung einer Hülsenbefestigung, die keine zusätzlichen Anschläge oder zusätzliche Hülsenbefestigungen am Fittingkörper benötigt; dadurch bestimmt ausschließlich der Profilaußendurchmesser des Fittingkörpers den Durchmesser seiner (Rohr-)Abgänge. Dies hat eine signifikante Materialersparnis zur Folge.
- Die Erfindung kann sowohl für Edelstahlhülsen als auch für Aluminiumhülsen sowie für alle anderen Hülsenmaterialien verwendet werden.
- Die Hülsenbefestigung kann aus einem Material bestehen, das unabhängig von dem Fittingkörpermaterial ist (beispielsweise Kunststoff).
- Das Verriegelungs- bzw. Abstandshalteelement ist auch einsetzbar als Anschlag für das Presswerkzeug (Multifunktionselement).

Die Erfindung wird nachfolgend anhand zweier Ausführungsbeispiele unter Bezugnahme auf die Zeichnung näher erläutert. Im Einzelnen zeigen dabei:
- Fig. 1: einen Halbschnitt durch einen Pressfitting mit von einzelnen Halte-elementen im vormontierten Zustand gehaltener Presshülse,
- Fig. 2: eine Ansicht auf den Pressfitting gemäß Fig. 1 in Richtung des Pfeils II und
- Fig. 3: eine Ansicht auf ein alternatives Ausführungsbeispiels eines Pressfittings, ebenfalls entsprechend dem Pfeil II der Fig. 1.

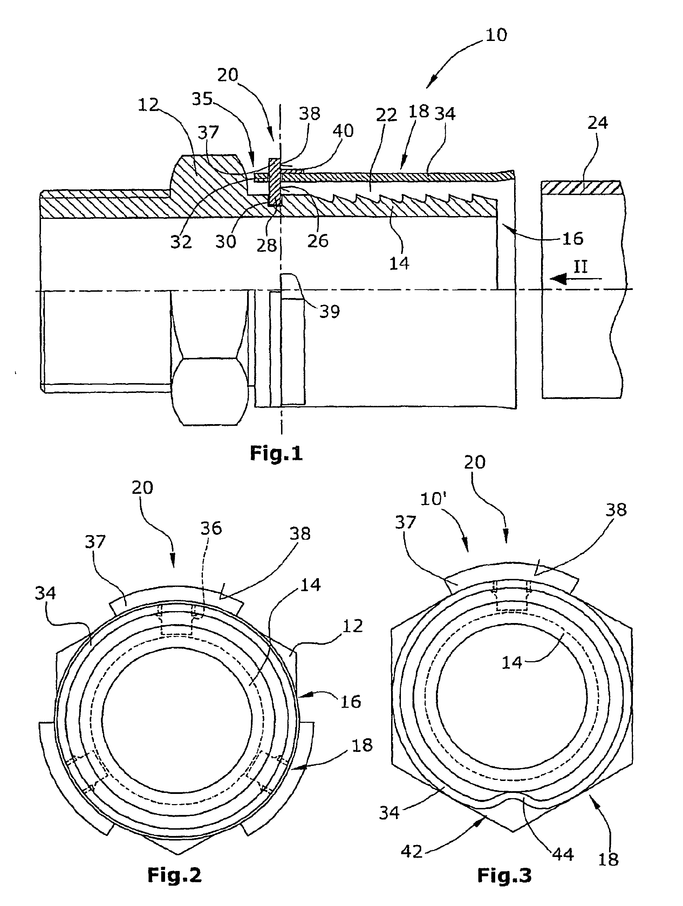

In Fig. 1 ist im Halbschnitt ein Pressfitting 10 gemäß einem Ausführungsbeispiel der Erfindung gezeigt. Der Pressfitting 10 weist einen Fittingkörper 12 aus Metall oder Kunststoff auf, der eine Stützhülse 14 aufweist. Die Stützhülse 14 steht vom restlichen Teil des Fittingkörpers 12 ab und weist ein freies Ende 16 auf. Konzentrisch zur Stützhülse 14 ist eine dauerhaft plastische verformbare Presshülse 18 aus beispielsweise Metall angeordnet, die von in diesem Ausführungsbeispiel drei Verriegelungs-/Abstandshalteelementen 20 aus beispielsweise Kunststoff am Fittingkörper 12 bzw. der Stützhülse 14 gehalten und fixiert ist. In den sich zwischen der Stützhülse 14 und der Presshülse 18 bildenden Ringraum 22 wird das Ende eines Kunststoffrohres oder Kunststoff-Metall-Verbundrohres 24 eingeschoben, bis es beispielsweise an den Elementen 20 ausgebildete Anlageflächen 26 kontaktiert, die die maximale Einschubtiefe des Rohres in den Ringraum 22 bestimmen. Die Stützhülse 14 ist im Regelfall profiliert und kann ein Dichtungselement (z. B. einen O-Ring) aufweisen.

Die Besonderheit des Pressfittings 10 besteht in der Halterung der Presshülse 18 durch lediglich einige wenige Verriegelungs-/Abstandshalteelemente 20 und insbesondere durch ein Naltesystem, das keinen umlaufenden Ringkörper aufweist. Hierdurch ergeben sich Materialeinsparungen, die insbesondere bei Pressfittingen für große Rohrdurchmesser spürbar sind. Im Ausführungsbeispiel der Fign. 1 und 2 weist jedes Element 20 einen Verriegelungsvorsprung 28 auf, wobei sämtliche Vorsprünge 28 in eine Umfangs-(Klemm-)Nut 30 des Fittingkörpers 12 bzw. in dessen Stützhülse 14 eingetaucht sind. Die Elemente 20 erstrecken sich durch Öffnungen 32 in der Wandung 34 der Presshülsen 18 an deren Halteenden 35 und weisen Fixierhaken 36 oder dergleichen auf, die der Sicherung der Elemente 20 an der Presshülse 18 dienen.

Fig. 2 verdeutlicht die Anordnung der Verriegelungs-/Abstandshalteelemente 20. In diesem Ausführungsbeispiel sind drei Elemente 20 jeweils um 120° gegeneinander versetzt vorgesehen. Zwischen den Elementen 20 bilden sich Freiräume, die dazu genutzt werden können, um zu kontrollieren, ob das in den Ringraum 22 eingeschobene Rohrende weit genug eingeschoben ist. Die Elemente 20 weisen außen an der Wandung 34 der Presshülse 18 anliegende bzw. angeordnete Bogenabschnitte 37 auf, die Ringabschnitte bilden.

Wie in Fig. 1 angedeutet, weisen die Elemente 20 in Umfangsrichtung der Presshülse 18 miteinander fluchtende Anschlagflächen 38 auf. Sämtliche Anschlagflächen 38 liegen in einer gemeinsamen Radialebene 39 und dienen der (Axial-)Anlage durch ein (nicht dargestelltes) Presswerkzeug, das somit vorschriftsmäßig zum Pressfitting 10 ausgerichtet werden kann, um eine ordnungsgemäße Verpressung zu erzeugen. Die Elemente 20 sind ferner mit Laschen 40 versehen, die beim Verpressen von dem (nicht dargestellten) Presswerkzeug erfasst und von dem Rest der Elemente 20 getrennt werden. Damit ist z.B. eine Verpresskennzeichnung möglich.

Fig. 3 zeigt einen alternativ ausgebildeten Pressfitting 10', wobei diejenigen Elemente, die den Elementen des Pressfittings 10 gemäß Fign. 1 und 2 entsprechen bzw. konstruktiv gleich mit diesen sind, mit den gleichen Bezugszeichen versehen sind.

Bei dem Ausführungsbeispiel gemäß Fig. 3 weist der Pressfitting 10' neben mindestens einem Verriegelungs-/Abstandshalteelement 20, wie es oben im Zusammenhang mit den Fign. 1 und 2 beschrieben ist, mindestens ein ausschließlich der Abstandshalterung dienendes Element 42 auf, das in den Ringraum 22 am Halteende 35 der Presshülse 18 hineinragt. Bei diesem Abstandshalteelement 42 kann es sich um ein separates Element oder um ein einteilig mit der Presshülse 18 ausgebildetes Halteelement 42 handeln, wie es in diesem Ausführungsbeispiel in Fig. 3 gezeigt ist. Das Abstandshalteelement 42 ist als sickenförmige Vertiefung 44 der Presshülse 18 ausgebildet, die durch Verformung der Wandung 34 der Presshülse 18 hergestellt ist. Die sickenförmige Vertiefung 44 liegt außen an der Stützhülse 14 an und dient somit der Abstandshalterung. Der Pressfitting 10' weist zweckmäßigerweise mehrere Verriegelungs-/Abstandshalteelemente 20 und/oder mehrere lediglich die Abstandshaltefunktion ausübende Abstandshalteelemente 42 auf, die in Umfangsrichtung versetzt zueinander angeordnet sind.

## Patentansprüche

1. Pressfitting für ein Rohr, insbesondere Kunststoffrohr oder Kunststoff-Metall-Verbundrohr, mit
- einem Fittingkörper (12), der eine Stützhülse (14) mit einem freien Ende (16) aufweist, über das auf die Stützhülse (14) ein Ende eines anzuschließenden Rohres (24) aufschiebbar ist, und
- einer Presshülse (18), die zum Andrücken eines auf die Stützhülse (14) geschobenen Endes eines anzuschließenden Rohres (24) plastisch verformbar ist und die ein das freie Ende (16) der Stützhülse (14) abgewandtes axiales Halteende (35) aufweist, an dem die Presshülse (18) am Fittingkörper (12) gehalten ist,
- wobei die Presshülse (18) mittels mindestens eines an ihrem Halteende (35) angeordneten Abstandshalteelements (42) im wesentlichen konzentrisch zur Stützhülse (14) gehalten ist,
- wobei der Fittingkörper (12) im Bereich des Halteendes (35) der Presshülse (18) eine Verriegelungsvertiefung (30) aufweist und
- wobei die zylindrische Wandung (34) der Presshülse (18) am Halteende (35) mindestens eine Öffnung (32) aufweist, durch die sich ein Verriegelungselement (20) zur axialen Fixierung der Presshülse (18) am Fittingkörper (12) erstreckt,
- wobei das Verriegelungselement (20) in die Verriegelungsvertiefung (30) des Fittingkörpers (12) hineinragt,
**dadurch gekennzeichnet,**
**dass** das Verriegelungselement (20) in der Verriegelungsvertiefung (30) endet und das Verriegelungselement (20) sich im wesentlichen radial bis in die Verriegelungsvertiefung (30) hinein erstreckt.

2. Pressfitting für ein Rohr, insbesondere Kunststoffrohr oder Kunststoff-Metall-Verbundrohr, mit
- einem Fittingkörper (12), der eine Stützhülse (14) mit einem freien Ende (16) aufweist, über das auf die Stützhülse (14) ein Ende eines anzuschließenden Rohres (24) aufschiebbar ist, und
- einer Presshülse (18), die zum Andrücken eines auf die Stützhülse (14) geschobenen Endes eines anzuschließenden Rohres (24) plastisch verformbar ist und die ein das freie Ende (16) der Stützhülse (14) abgewandtes axiales Halteende (35) aufweist, an dem die Presshülse (18) an Fittingkörper (12) gehalten ist,
- wobei die Presshülse (18) mittels mindestens eines an ihrem Halteende (35) angeordneten Abstandshalteelements (42) im wesentlichen konzentrisch zur Stützhülse (14) gehalten ist,
- wobei der Fittingkörper (12) im Bereich des Halteendes (35) der Presshülse (18) einen Verriegelungsvorsprung aufweist und
- wobei die zylindrische Wandung (34) der Presshülse (18) am Halteende (35) mindestens eine Öffnung (32) aufweist, durch die sich ein Verriegelungselement (20) zur axialen Fixierung der Presshülse (18) am Fittingkörper (12) erstreckt,
- wobei das Verriegelungselement (20) den Verriegelungsvorsprung des Fittingkörpers (12) um- oder hintergreift,
**dadurch gekennzeichnet,**
**dass** das Verriegelungselement (20) sich im wesentlichen radial bis an den Verriegelungsvorsprung erstreckt.

3. Pressfitting nach Anspruch 1 oder 2, **dadurch gekennzeichnet, dass** sich das mindestens eine Abstandshalteelement (42) zwischen dem Fittingkörper (12) und der Presshülse (18) abstützt.

4. Pressfitting nach einem der Ansprüche 1 bis 3, **dadurch gekennzeichnet, dass** das Abstandshalteelement (42) als eine insbesondere sickenförmige Verformung (44) der Presshülse (18) an deren Halteende (35) ausgebildet ist.

5. Pressfitting nach einem der Ansprüche 1 bis 4, **dadurch gekennzeichnet, dass** das mindestens eine Abstandshalteelement sich durch eine Öffnung (32) in der Wandung (34) der Presshülse (18) bis in eine Vertiefung (30) am Fittingkörper (18) erstreckt und somit die Funktion des Verriegelungselements (20) übernimmt.

6. Pressfitting nach einem der Ansprüche 1 oder 3 bis 5, **dadurch gekennzeichnet, dass** die Vertiefung (30) bzw. die Vertiefungen (30) als Umfangsnut der Stützhülse (14) ausgebildet ist/sind.

7. Pressfitting nach einem der Ansprüche 1 bis 6, **dadurch gekennzeichnet, dass** das mindestens eine Verriegelungselement (20) gegen ein unbeabsichtigtes Ablösen von der Presshülse (18) an dieser gesichert ist.

8. Pressfitting nach einem der Ansprüche 1 bis 7, **dadurch gekennzeichnet, dass** das mindestens eine Verriegelungselement (20) und/oder Abstandshalteelement (42) eine außen an der Wandung (34) der Presshülse (18) angeordnete Lasche (40) aufweist, die in einen Presswerkzeug-Anlagebereich der Presshülse (18) hineinragt und bei Einwirken eines Presswerkzeuges auf die Presshülse (18) zwecks Verformung derselben von dem Verriegelungselement (20) und/oder dem Abstandshalteelement (42) trennbar ist.

9. Pressfitting nach einem der Ansprüche 1 bis 8, **dadurch gekennzeichnet, dass** entweder das Verriegelungselement (20) oder das Abstandshalteelement (42) oder beide Elemente (20, 42) auch der Begrenzung der Rohreinführung in den Pressfitting dienen, indem sie mit der Stirnseite des anzuschließenden Rohrendes (24) in Kontakt kommen.

10. Pressfitting nach einem der Ansprüche 1 bis 9, **dadurch gekennzeichnet, dass** ein Element das Verriegelungselement (20) und das Abstandshalteelement (42) umfasst, wobei das Element als Anschlag zur Führung des Presswerkzeuges eingerichtet ist und/oder der Verpresskennzeichnung dient, indem zumindest ein Teil des Elements infolge der Einwirkung des Presswerkzeugs auf die Presshülse (18) abbrechbar oder sichtbar zerstörbar ist.

11. Pressfitting nach Anspruch 1 oder einem der Ansprüche 3 bis 10, das drei Verriegelungselemente (20) umfasst, die sämtlich in die am Fittingkörper (12) ausgebildete Vertiefung (30) hineinragen und sich gegen deren Grund abstützen.

12. Pressfitting nach Anspruch 1 oder 2, **dadurch gekennzeichnet, dass** das Abstandshalteelement (42) als ein Distanzstück im Zwischenraum zwischen Presshülse (18) und Fittingkörper (12) angeordnet ist.

13. Pressfitting nach einem der Ansprüche 1 bis 12, **dadurch gekennzeichnet, dass** mehrere Verriegelungselemente (20) oder mehrere Abstandshalteelemente (42) vorgesehen sind, die so entlang der Umfangsrichtung des Pressfittings gleichmäßig verteilt angeordnet sind, dass Zwischenräume zwischen den Verriegelungselementen (20) oder den Abstandshalteelementen (42) den Blick auf das Halteende der Presshülse (35) freigeben und eine Lagekontrolle bzw. eine Kontrolle der Einschubtiefe des anzuschließenden Rohrendes (24) erlauben.

## Claims

1. Press fitting for a pipe, in particular plastic pipe or plastic/metal composite pipe, comprising
- a fitting body (12) comprising a supporting sleeve (14) with a free end (16) via which one end of a connectable pipe (24) can be pushed onto the supporting sleeve (14), and
- a pressing sleeve (18), which can be deformed plastically for the press-fitting of an end of a connectable pipe (24) which has been pushed onto the supporting sleeve (14), the pressing sleeve (18) having an axial retaining end (35) which is directed away from the free end (16) of the supporting sleeve (14) and at which the pressing sleeve (18) is retained on the fitting body (12),
- wherein the pressing sleeve (18) is retained essentially concentrically in relation to the supporting sleeve (14) by means of at least one spacer element (42) arranged at its retaining end (35),
- wherein the fitting body (12) has a locking depression (30) in the region of the retaining end (35) of the pressing sleeve (18), and
- wherein the cylindrical wall (34) of the pressing sleeve (18), at the retaining end (35), comprises at least one opening (32) through which a locking element (20) extends in order to fix the pressing sleeve (18) axially on the fitting body (12),
- wherein the locking element (20) projects into the locking depression (30) of the fitting body (12),
**characterized**
**in that** the locking element (20) terminates in the locking depression (30) and the locking element (20) extends essentially radially into the locking depression (30).

2. Press fitting for a pipe, in particular plastic pipe or plastic/metal composite pipe, having
- a fitting body (12), comprising a supporting sleeve (14) with a free end (16) via which one end of a connectable pipe (24) can be pushed onto the supporting sleeve (14), and
- a pressing sleeve (18), which can be deformed plastically for the press-fitting of an end of a connectable pipe (24) which has been pushed onto the supporting sleeve (14), the press-fitting sleeve having an axial retaining end (35) which is directed away from the free end (16) of the supporting sleeve (14) and at which the press-fitting sleeve (18) is retained on the fitting body (12),
- wherein the pressing sleeve (18) is retained essentially concentrically in relation to the supporting sleeve (14) by means of at least one spacer element (42) arranged at its retaining end (35),
- wherein the fitting body (12) has a locking protrusion in the region of the retaining end (35) of the pressing sleeve (18), and
- wherein the cylindrical wall (34) of the pressing sleeve (18), at the retaining end (35), comprises at least one opening (32) through which a locking element (20) extends in order to fix the pressing sleeve (18) axially on the fitting body (12),
- wherein the locking element (20) engages around or behind the locking protrusion of the fitting body (12),
**characterized**
**in that** the locking element (20) extends essentially radially up to the locking protrusion.

3. Press fitting according to Claim 1 or 2, **characterized in that** the at least one spacer element (42) is supported between the fitting body (12) and the pressing sleeve (18).

4. Press fitting according to one of Claims 1 to 3, **characterized in that** the spacer element (42) is designed in the form of an in particular bead-like deformation (44) of the pressing sleeve (18) at the retaining end (35) thereof.

5. Press fitting according to one of Claims 1 to 4, **characterized in that** the at least one spacer element extends, through an opening (32) in the wall (34) of the pressing sleeve (18), into a depression (30) on the fitting body (18) and thus performs the function of the locking element (20).

6. Press fitting according to one of Claims 1 or 3 to 5, **characterized in that** the depression (30) or the depressions (30) are/is designed in the form of a circumferential groove of the supporting sleeve (14).

7. Press fitting according to one of Claims 1 to 6, **characterized in that** the at least one locking element (20) is secured on the pressing sleeve (18) such that it cannot become accidentally detached therefrom.

8. Press fitting according to one of Claims 1 to 7, **characterized in that** the at least one locking element (20) and/or spacer element (42) comprise a lug (40) which is arranged on the outside of the wall (34) of the pressing sleeve (18), projects into a pressing-tool-abutment region of the pressing sleeve (18) and, when the pressing sleeve (18) is subjected to the action of a pressing tool in order to be deformed, can be separated from the locking element (20) and/or the spacer element (42).

9. Press fitting according to one of Claims 1 to 8, **characterized in that** either the locking element (20) or the spacer element (42) also serves, or the two elements (20, 42) also serve, for limiting the extent to which the pipe is introduced into the press fitting, **in that** they come into contact with the end side of the pipe end (24) which is to be connected.

10. Press fitting according to one of Claims 1 to 9, **characterized in that** one element forms the locking element (20) and the spacer element (42), wherein the element is intended as a stop for guiding the pressing tool and/or serves to indicate that pressing has taken place, **in that** at least part of the element can be broken off, or can be visibly destroyed, as a result of the pressing sleeve (18) being subjected to the action of the pressing tool.

11. Press fitting according to Claim 1 or one of Claims 3 to 10, comprising three locking elements (20) which all project into the depression (30) formed on the fitting body (12) and are supported against the floor of said depression.

12. Press fitting according to Claim 1 or 2, **characterized in that** the spacer element (42) is arranged as a space-maintaining component in the interspace between the pressing sleeve (18) and fitting body (12).

13. Press fitting according to one of Claims 1 to 12, **characterized by** the provision of a plurality of locking elements (20) or a plurality of spacer elements (42), which are distributed uniformly along the circumferential direction of the press fitting such that interspaces between the locking elements (20) or the spacer elements (42) give a free view of the retaining end of the press-fitting sleeve (35) and make it possible to monitor position and/or to monitor the depth to which the pipe end (24) which is to be connected has been pushed in.

## Revendications

1. Raccord à presser pour un tube, en particulier un tube en plastique ou un tube composite plastique-métal, comprenant
- un corps de raccord (12), qui présente une douille de support (14) avec une extrémité libre (16), par le biais de laquelle une extrémité d'un tube (24) à raccorder peut être poussée sur la douille de support (14), et
- une douille de pressage (18) qui peut être déformée plastiquement pour presser une extrémité d'un tube (24) à raccorder poussée sur la douille de support (14) et qui présente une extrémité de retenue axiale (35) opposée à l'extrémité libre (16) de la douille de support (14), au niveau de laquelle extrémité de retenue axiale la douille de pressage (18) est retenue sur le corps de raccord (12),
- la douille de pressage (18) étant retenue de manière essentiellement concentrique par rapport à la douille de support (14) au moyen d'au moins un élément d'espacement (42) disposé au niveau de son extrémité de retenue (35),
- le corps de raccord (12) présentant un renfoncement de verrouillage (30) dans la région de l'extrémité de retenue (35) de la douille de pressage (18) et
- la paroi cylindrique (34) de la douille de pressage (18) présentant au moins une ouverture (32) à l'extrémité de retenue (35), à travers laquelle s'étend un élément de verrouillage (20) pour la fixation axiale de la douille de pressage (18) sur le corps de raccord (12),
- l'élément de verrouillage (20) pénétrant dans le renfoncement de verrouillage (30) du corps de raccord (12),
**caractérisé en ce que**
l'élément de verrouillage (20) se termine dans le renfoncement de verrouillage (30) et l'élément de verrouillage (20) s'étend essentiellement radialement jusqu'à l'intérieur du renfoncement de verrouillage (30).

2. Raccord à presser pour un tube, en particulier un tube en plastique ou un tube composite plastique-métal, comprenant
- un corps de raccord (12), qui présente une douille de support (14) avec une extrémité libre (16), par le biais de laquelle une extrémité d'un tube (24) à raccorder peut être poussée sur la douille de support (14), et
- une douille de pressage (18) qui peut être déformée plastiquement pour presser une extrémité d'un tube (24) à raccorder poussée sur la douille de support (14) et qui présente une extrémité de retenue axiale (35) opposée à l'extrémité libre (16) de la douille de support (14), au niveau de laquelle extrémité de retenue axiale la douille de pressage (18) est retenue sur le corps de raccord (12),
- la douille de pressage (18) étant retenue de manière essentiellement concentrique par rapport à la douille de support (14) au moyen d'au moins un élément d'espacement (42) disposé au niveau de son extrémité de retenue (35),
- le corps de raccord (12) présentant une saillie de verrouillage dans la région de l'extrémité de retenue (35) de la douille de pressage (18) et
- la paroi cylindrique (34) de la douille de pressage (18) présentant au moins une ouverture (32) à l'extrémité de retenue (35), à travers laquelle s'étend un élément de verrouillage (20) pour la fixation axiale de la douille de pressage (18) sur le corps de raccord (12),
- l'élément de verrouillage (20) venant en prise autour de la saillie de verrouillage du corps de raccord (12), ou par l'arrière avec celle-ci,
**caractérisé en ce que**
l'élément de verrouillage (20) s'étend essentiellement radialement jusqu'à la saillie de verrouillage.

3. Raccord à presser selon la revendication 1 ou 2, **caractérisé en ce que** l'au moins un élément d'espacement (42) s'appuie entre le corps de raccord (12) et la douille de pressage (18).

4. Raccord à presser selon l'une quelconque des revendications 1 à 3, **caractérisé en ce que** l'élément d'espacement (42) est réalisé sous forme d'une déformation notamment en forme de moulure (44) de la douille de pressage (18) au niveau de son extrémité de retenue (35).

5. Raccord à presser selon l'une quelconque des revendications 1 à 4, **caractérisé en ce que** l'au moins un élément d'espacement s'étend à travers une ouverture (32) dans la paroi (34) de la douille de pressage (18) jusque dans un renfoncement (30) au niveau du corps de raccord (12) et réalise ainsi la fonction de l'élément de verrouillage (20).

6. Raccord à presser selon l'une quelconque des revendications 1 ou 3 à 5, **caractérisé en ce que** le renfoncement (30) ou les renfoncements (30) est/sont réalisé(s) sous forme de rainure périphérique de la douille de support (14).

7. Raccord à presser selon l'une quelconque des revendications 1 à 6, **caractérisé en ce que** l'au moins un élément de verrouillage (20) est fixé contre la douille de pressage (18) de manière à empêcher tout détachement accidentel de celle-ci.

8. Raccord à presser selon l'une quelconque des revendications 1 à 7, **caractérisé en ce que** l'au moins un élément de verrouillage (20) et/ou l'élément d'espacement (42) présentent une patte (40) disposée à l'extérieur au niveau de la paroi (34) de la douille de pressage (18), laquelle pénètre dans une région d'appui d'un outil de pressage de la douille de pressage (18), et lors de l'action d'un outil de pressage sur la douille de pressage (18) en vue de la déformation de cette dernière, peut être séparée de l'élément de verrouillage (20) et/ou de l'élément d'espacement (42).

9. Raccord à presser selon l'une quelconque des revendications 1 à 8, **caractérisé en ce que** soit l'élément de verrouillage (20) soit l'élément d'espacement (42) soit les deux éléments (20, 42) servent également à limiter l'introduction du tube dans le raccord à presser, en venant en contact avec le côté frontal de l'extrémité du tube (24) à raccorder.

10. Raccord à presser selon l'une quelconque des revendications 1 à 9, **caractérisé en ce qu'**un élément comprend l'élément de verrouillage (20) et l'élément d'espacement (42), l'élément étant prévu en tant que butée pour guider l'outil de pressage et/ou servant au repérage du pressage, **en ce qu'**au moins une partie de l'élément, suite à l'action de l'outil de pressage sur la douille de pressage (18), peut être rompue ou détruite de manière visible.

11. Raccord à presser selon la revendication 1 ou l'une quelconque des revendications 3 à 10, qui comprend trois éléments de verrouillage (20), qui pénètrent tous dans le renfoncement (30) réalisé sur le corps de raccord (12) et qui s'appuient contre sa base.

12. Raccord à presser selon la revendication 1 ou 2, **caractérisé en ce que** l'élément d'espacement (42) est disposé en tant que pièce d'espacement dans l'espace intermédiaire entre la douille de pressage (18) et le corps de raccord (12).

13. Raccord à presser selon l'une quelconque des revendications 1 à 12, **caractérisé en ce que** plusieurs éléments de verrouillage (20) ou plusieurs éléments d'espacement (42) sont prévus, lesquels sont disposés de manière répartie uniformément le long de la direction périphérique du raccord à presser, **en ce que** des espaces intermédiaires entre les éléments de verrouillage (20) ou les éléments d'espacement (42) permettent de voir l'extrémité de retenue de la douille de pressage (35) et permettent un contrôle de la position ou un contrôle de la profondeur d'enfoncement de l'extrémité du tube à raccorder (24).
